# EUROPEAN PATENT APPLICATION

(11) **EP 0 589 225 A1**
(43) Date of publication of application: **30.03.1994**
(21) Application number: 93113531.3
(22) Date of filing: 24.08.1993
(51) Int. Cl.: B29D 28/00, B29C 61/02, B26F 1/26

(54) **Method for forming ultra-microapertures in thin thermoplastic film materials and products formed thereby**

(30) Priority: 23.09.1992 US 950582
(71) Applicant: KIMBERLY-CLARK CORPORATION, Neenah Wisconsin 54957-0349 (US)
(72) Inventor: Cohen, Bernard, Berkley Lake, Georgia 30136 (US); Jameson, Lee Kirby, Roswell, Georgia 30075 (US)
(74) Representative: Grünecker, Kinkeldey, Stockmair & Schwanhäusser Anwaltssozietät

(57) **Abstract**

The invention is directed toward a method for forming a generally uniform pattern of ultra-microapertures in a thermoplastic film (14). The method includes the steps of: (a) forming (38) a generally uniform pattern of microapertures in a thermoplastic film; and (b) heating (76) the microapertured film in an unconstrained condition to a temperature where the microapertures shrink to ultra-microaperture size.

## Description

### RELATED APPLICATIONS

Other patent applications dealing with applications of hydrosonics by the present inventors include U.S. patent application serial number 07/769,050 entitled "Hydrosonically Microapertured Thin Thermoset Sheet Materials"; U.S. patent application serial number 07/769,047 entitled "Hydrosonically Microapertured Thin Thermoplastic Sheet Materials"; U.S. patent application serial number 07/768,782 entitled "Pressure Sensitive Valve system and Process For Forming Said System"; U.S. patent application serial number 07/768,494 entitled " Hydrosonically Embedded Soft Thin Film Materials and Process For Forming Said Materials"; U.S. patent application number 07/768,788 entitled "Hydrosonically Microapertured Thin Naturally Occurring Polymeric Sheet Materials and Method of Making the Same"; U.S. patent application serial number 07/769,048 entitled "Hydrosonically Microapertured Thin Metallic Sheet Materials"; U.S. patent application serial number 07/769,045 entitled "Process For Hydrosonically Microaperturing Thin Sheet Materials"; and U.S. Patent application serial number 07/767,727 entitled "Process For Hydrosonically Area Thinning Thin Sheet Materials". This first group of applications was filed on September 30, 1991. All of these applications are hereby incorporated by reference.

Additional applications, by the present inventors, directed to applications of hydrosonic energy which are being filed contemporaneously with the present application include U.S patent application serial number entitled "Process for Forming Electret Filter Media and Electret Filter Media"; U.S. patent application serial number entitled "Hydrosonically Bonded Nonwoven/Paper Material and Process for Forming the Same"; U.S. patent application serial number entitled "Method for Forming a Net-Like Material From a Thermoplastic Film"; and U.S. patent application serial number entitled "Process for Hydrosonically Area Embossing Thin Thermoplastic Film Materials and Products Formed Thereby". All of these applications are hereby incorporated by reference.

### FIELD OF THE INVENTION

The field of the present invention encompasses processes for forming very small apertures in a thin film and thin film which has been provided with very small apertures.

### BACKGROUND OF THE INVENTION

For quite some time there has been investigation by those in the art to ascertain new, efficient and profitable methods for forming apertures and microapertures in thin thermoplastic films. The so apertured films have a wide variety of applications such as, for example, filtration media. The inventors have discovered that an application of hydrosonic energy, as defined and discussed in the referenced related applications, can yield a pattern of small microapertures in a wide variety of materials, including thermoplastic films. However, one possible disadvantage with the above-referenced hydrosonic aperturing process is that, to date, there has existed a practical limitation on the lower limit of the size of the area of the microapertures which can be formed thereby. This lower limit is generally in the range of about ten (10) square micrometers (microns). Thus, apertures having an area of less than about ten (10) square micrometers have not yet been satisfactorily made with such a process.

Accordingly, the present inventors have sought to determine a method whereby microapertures having an area of less than about ten (10) square micrometers can be formed in thin sheet materials.

### DEFINITIONS

As used herein, the term "thermoplastic material" refers to a high polymer that softens when exposed to heat and returns to its original condition when cooled to room temperature. Natural substances which exhibit this behavior are crude rubber and a number of waxes. Other exemplary thermoplastic materials include, without limitation, polyvinyl chloride, polyesters, nylons, fluorocarbons, polyolefins such as linear polyethylene, for example, linear low density polyethylene, polyurethane prepolymer, polystyrene and polypropylene.

As used herein, the term "thermoplastic film" refers to a generally nonporous item formed from a thermoplastic material that can be arranged in generally planar configuration.

As used herein, the term "thin thermoplastic film" refers to a thermoplastic film having an average thickness generally of less than about ten (10) mils. Average thickness is determined by randomly selecting five (5) locations on a given sheet material, measuring the thickness of the film at each location to the nearest 0.1 mil, and averaging the five values (sum of the five values divided by five).

As used herein, the term "mesh count" refers to the number which is the product of the number of wires in a wire mesh screen in both the machine (MD) and cross-machine (CD) directions in a given unit area. For example, a wire mesh screen having 100 wires per inch in the machine direction and 100 wires per inch in the cross machine direction would have a mesh count of 10,000 per square inch. As a result of the interweaving of these wires, raised areas are present on both sides of the mesh screen. The number of raised areas on one side of such a wire mesh screen is generally one-half of the mesh count.

As used herein, the term "aperture" refers to a generally linear hole or passageway. Aperture is to be distinguished from and does not include holes or passageways having the greatly tortuous path or passageways found in membranes.

As used herein, the term "ultra-microaperture" refers to an aperture which has an area of less than about 10 square micrometers. The area of the ultra-microaperture is to be measured at the narrowest point in the linear passageway or hole. Typically, the area of an ultra-microaperture will range from about one (1) square micrometer to less than about ten (10) square micrometers.

As used herein, the term "ultrasonic vibrations" refers to vibrations having a frequency of at least about 20,000 cycles per second. The frequency of the ultrasonic vibrations may range from about 20,000 to about 400,000 cycles per second or more.

As used herein, the term "hydrosonics" refers to the application of ultrasonic vibrations to a material where the area of such application has had a liquid applied thereto to the extent that the liquid is present in sufficient quantity to generally fill the gap between the tip of the ultrasonic horn and the surface of the material.

### OBJECTS OF THE INVENTION

Accordingly, it is a general object of the present invention to provide a process for forming a pattern of very small ultra-microapertures in a thin thermoplastic film.

Yet another object of the present invention is a thin thermoplastic film which has been provided with a pattern of very small ultra-microapertures.

Still further objects and the broad scope of applicability of the present invention will become apparent to those of skill in the art from the details given hereinafter. However, it should be understood that the detailed description of the presently preferred embodiments of the present invention is given only by way of illustration because various changes and modifications well within the spirit and scope of the invention will become apparent to those of skill in the art in view of this detailed description.

### SUMMARY OF THE INVENTION

In response to the foregoing problems and difficulties encountered by those in the art, we have developed a method for forming a generally uniform pattern of ultra-microapertures in a thermoplastic film. The method includes the steps of: (1) forming a generally uniform pattern of microapertures in a thermoplastic film; and (2) heating the microapertured film while the film is unconstrained to a temperature where the microapertures shrink to form ultra-microapertures having an area ranging from at least about 1 square micrometer to less than about 10 square micrometers.

In one embodiment, the method includes the steps of: (1) placing the thermoplastic film on a pattern anvil having a pattern of raised areas wherein the height of the raised areas is greater than the thickness of the film; (2) conveying the film, while placed on the pattern anvil, in a machine direction through an area where a liquid is applied to the film; (3) subjecting the film to ultrasonic vibrational energy in the area where the liquid is applied to the film to microaperture the film in a pattern generally the same as the pattern of raised areas on the pattern anvil; and (4) heating the microapertured film while it is not subject to physical constraint to a temperature where the microapertures shrink to form ultra-microapertures ranging in area from about 1 square micrometer to less than about 10 square micrometers.

In some embodiments, the thermoplastic film may be heated to at least about 110 degrees Centigrade. For example, the thermoplastic film may be heated to at least about 120 degrees Centigrade.

In some embodiments, the thermoplastic film may be selected from one or more of the group including one or more of polyolefins, polyesters, nylons, caprolactams, polyvinyl alcohol and thermoplastic elastomers.

In some embodiments, the area of the ultra-microapertures may range from about 1 square micrometer to less than about 5 square micrometers. For example, the area of the ultra-microapertures may range from about 1 square micrometer to less than about 2.5 square micrometers.

In some embodiments, the liquid may be selected from the group including one or more of water, mineral oil, a chlorinated hydrocarbon, ethylene glycol or a solution of 50 volume percent water and 50 volume percent 2 propanol. For example, the chlorinated hydrocarbon may be 1,1,1 trichloroethane or carbon tetrachloride.

The invention is also directed toward a thermoplastic film defining at least about 1,000 ultra-microapertures per square inch over at least a portion thereof. For example, the film may define at least about 5,000 ultra-microapertures per square inch over at least a portion thereof. More particularly, the film may define at least about 20,000 ultra-microapertures per square inch over at least a portion thereof. More particularly, the film may define at least about 90,000 ultra-microapertures per square inch over at least a portion thereof. For example, the film may define at least about 160,000 ultra-microapertures per square inch over at least a portion thereof.

In some embodiments of the present invention the apertured film has a very uniform application of thermal energy applied thereto in order to effect a more uniform shrinking of the apertures. One method for effecting the uniform application of heat to the apertured material is to pass the apertured film through a bath of a heated liquid such as water. Other exemplary liquids which may be utilized include, for example, chlorobenzene; 1,2,4 trichlorobenzene; alpha, 2, 4 trichlorotoluene, butyl cellosolve; 1, 1, 1, 2, 2, 3, 3 heptachloropropane; perfluorotertiaryamines and perflurotributylamine.

### THE FIGURES

Figure I is a schematic representation of apparatus which may be utilized to perform the process of the present invention.

Figure II is a cross sectional view of the transport mechanism depicted in Figure I taken along lines A-A in Figure I.

Figure III is a schematic representation of the dotted line area depicted in Figure I where the ultrasonic vibrations are applied to the thin thermoplastic film.

Figures IV and 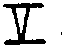 are photomicrographs of a thin thermoplastic film before and after the apertures have been reduced to ultra-microaperture size in accordance with the present invention, respectively.

### DETAILED DESCRIPTION OF THE INVENTION

Turning now to the figures where like reference numerals represent like structure and, in particular to Figure I which is a schematic representation of an apparatus which can carry out the method of the present invention, it can be seen that the apparatus is generally represented by the reference numeral 10. In operation, a supply roll 12 of a thin thermoplastic film 14 to be ultra-microapertured is provided. As has been previously stated, the term thin thermoplastic film refers to a film which has an average thickness of about ten (10) mils or less. Additionally, generally speaking, the average thickness of the thin thermoplastic film 14 will be at least about 0.25 mil. For example, the average thickness of the thin thermoplastic film 14 may range from about 0.25 mil to about 5 mils. More particularly, the average thickness of the thin thermoplastic film 14 may range from about 0.25 mil to about 2 mils. Even more specifically, the average thickness of the thin thermoplastic film 14 may range from about 0.5 mil to about 1 mil.

The thin thermoplastic film 14 may be formed from a material selected from one or more of the group including one or more of polyolefins; such as, for example, linear low density polyethylene; polyethylene; polypropylene; polybutylene; polyesters; nylons; or thermoplastic elastomers such as, for example, polyurethanes. The thin thermoplastic film 14 may be formed from a blend of one or more thermoplastic materials which may be combined to form the film 14.

The thin thermoplastic film 14 is transported to a first nip 16 formed by a first transport roll 18 and a first nip roller 20 by the action of an endless transport mechanism 22 which moves in the direction indicated by the arrow 24. The transport mechanism 22 is driven by the rotation of the first transport roller 18 in conjunction with a second transport roller 26 which, in turn are driven by a conventional power source, not shown.

Figure II is a cross sectional view of the transport mechanism 22 taken along lines A-A in Figure I. Figure II discloses that the transport mechanism 22 includes a heavy duty transport wire mesh screen 28 usually having a mesh count of less than about 400 (i.e. less than a 20 wires per inch MD by 20 wires per inch CD mesh screen if machine direction (MD) and cross machine direction (CD) wire count is the same). Heavy duty mesh wire screens of this type may be made from a variety of materials such as, for example, plastics, nylons or polyesters, and are readily available to those in the art. Located above and attached to the transport screen 28 is an endless flat shim plate 30. The shim plate 30 desirably is formed from stainless steel. However, those of skill in the art will readily recognize that other materials may be utilized. Located above and attached to the shim plate 30 is a fine mesh wire pattern screen 32 usually having a mesh count of at least about 2,000 (i.e. at least about 45 wires per inch MD by 45 wires per inch CD mesh screen if MD and CD wire count is the same). Fine mesh wire screens of this type are readily available to those in the art. The fine mesh wire screen 32 has raised areas or knuckles 34 which perform the function of a pattern anvil as will be discussed later.

From the first nip 16 the thin thermoplastic film 14 is transported by the transport mechanism 22 over a tension roll 36 to an area 38 (defined in Figure I by the dotted lined circle) where the thin thermoplastic film 14 is subjected to ultrasonic vibrations.

The assembly for subjecting the thin thermoplastic film 14 to the ultrasonic vibrations is conventional and is generally designated at 40. The assembly 40 includes a power supply 42 which, through a power control 44, supplies power to a piezoelectric transducer 46. As is well known in the art, the piezoelectric transducer 46 transforms electrical energy into mechanical movement as a result of the transducer's vibrating in response to an input of electrical energy. The vibrations created by the piezoelectric transducer 46 are transferred, in conventional manner, to a mechanical movement booster or amplifier 48. As is well known in the art, the mechanical movement booster 48 may be designed to increase the amplitude of the vibrations (mechanical movement) by a known factor depending upon the configuration of the booster 48. In further conventional manner, the mechanical movement (vibrational energy) is transferred from the mechanical movement booster 48 to a conventional knife edge ultrasonic horn 50. It should be realized that other types of ultrasonic horns 50 could be utilized. For example, a rotary type ultrasonic horn could be used. The ultrasonic horn 50 may be designed to effect yet another boost or increase in the amplitude of the mechanical movement (vibrations) which is to be applied to the thin thermoplastic sheet material 14. Lastly, the assembly includes an actuator 52 which includes a pneumatic cylinder, not shown. The actuator 52 provides a mechanism for raising and lowering the assembly 40 so that the tip 54 of the ultrasonic horn 50 can apply tension to the transport mechanism 22 upon the assembly 40 being lowered. It has been found that it is necessary to have some degree of tension applied to the transport mechanism 22 upon the lowering of the assembly for proper application of vibrational energy to the thin film 14 to form microapertures in the thin thermoplastic film 14. One desirable aspect of this tensioned arrangement is that the need to design a finely toleranced gap between the tip 54 of the horn 50 and the raised areas or knuckles 34 of the fine mesh wire screen 32 is not necessary.

Figure III is a schematic representation of the area 38 where the ultrasonic vibrations are applied to the thin thermoplastic film 14. As can be seen in Figure III, the transport mechanism 22 forms an angle 56 with the tip 54 of the ultrasonic horn 50. While some microaperturing will occur if the angle 56 is as great as 45 degrees, it has been found that it is desirable for the angle 56 to range from about 5 degrees to about 15 degrees. For example, the angle 56 may range from about 7 to about 13 degrees. More particularly, the angle 56 may range from about 9 to about 11 degrees.

Figure III also illustrates that the transport mechanism 22 is supported from below by the first tension roll 36 and a second tension roll 58. Positioned somewhat prior to the tip 54 of the ultrasonic horn 50 is a spray nozzle 60 which is configured to apply a liquid 62 to the surface of the thin thermoplastic film 14 just prior to the film's 14 being subjected to ultrasonic vibrations by the tip 54 of the ultrasonic horn 50. The liquid 62 desirably may be selected from the group including one or more of water; mineral oil; a chlorinated hydrocarbon; ethylene glycol; or a solution of 50 volume percent water and 50 volume percent 2 propanol. For example, in some embodiments the chlorinated hydrocarbon may be selected from the group including 1,1,1 trichloroethane or carbon tetrachloride. It should be noted that the wedge-shaped area 64 formed by the tip 54 of the ultrasonic horn 50 and the transport mechanism 22 should be subjected to a sufficient amount of the liquid 62 for the liquid 62 to act as both a heat sink and a coupling agent for the most desirable results.

Positioned below the transport mechanism 22 in the area where the tip 54 of the ultrasonic horn 50 is located is a liquid collection tank 66. (See Figure I.) The liquid collection tank 66 serves to collect liquid 62 which has been applied to the surface of the thin thermoplastic film 14 and which has either been driven through the film 14 and/or the transport mechanism 22 or over the edges of the transport mechanism 22 by the action of the vibrations of the tip 54 of the ultrasonic horn 50. Liquid 62 which is collected in the collection tank 66 is transported by tubing 68 to a liquid holding tank 70.

Figure I illustrates that the liquid holding tank 70 contains a pump 72 which, by way of additional tubing 74, supplies the liquid 62 to the liquid spray nozzle 60. Accordingly, the liquid 62 may be recycled for a considerable period of time.

While the mechanism of action may not be fully understood and the present application should not be bound to any particular theory or mechanism of action, it is believed that the presence of the liquid 62 in the wedge-shaped area 64 during operation of the ultrasonic horn 50 accomplishes two separate and distinct functions. First, the presence of the liquid 62 allows the liquid 62 to act as a heat sink which allows the ultrasonic vibrations to be applied to the thin thermoplastic film 14 without the thin thermoplastic film 14 being altered or destroyed as by melting. Secondly, the presence of the liquid 62 in the wedge-shaped area 64 allows the liquid 62 to act as a coupling agent in the application of the vibrations from the ultrasonic horn 50 to the thin thermoplastic film 14.

As has been stated in our prior applications, it has been discovered that the action of the ultrasonic horn 50 on the thin thermoplastic sheet material 14 microapertures the thin thermoplastic film 14. The microapertures are punched through the thin thermoplastic film 14 in the pattern of the raised areas or knuckles 34 of the fine mesh wire pattern screen 32. Generally, the number of microapertures produced will be equal to the number of raised areas or knuckles 34 on the upper surface of the fine mesh wire screen 32. That is, the number of microapertures will generally be one-half the mesh count of a given area of pattern screen 32. For example, if the pattern screen 32 is 100 wires per inch MD by 100 wires per inch CD, the total number of knuckles or raised areas 34 on one side of the pattern wire 32, per square inch, will be 100 times 100 divided by 2. This equals 5,000 microapertures per square inch. For a 200 wires per inch MD by 200 wires per inch CD pattern screen 32 the calculation yields 20,000 microapertures per square inch. Depending somewhat on the thickness of the thin thermoplastic film 14, at a mesh count of about 90,000 (300 wires per inch MD by 300 wires per inch CD) the wires are so thin as to allow the knuckles 34 on both sides to microaperture the thin thermoplastic film 14 if sufficient force is applied. Thus, a 300 wires per inch MD by 300 wires per inch CD mesh screen yields 90,000 microapertures per square inch; for a 400 wires per inch MD by 400 wires per inch CD mesh--160,000 microapertures per square inch. Of course the MD and CD wire count of the wire mesh screen does not have to be the same.

It should also be noted that the number of microapertures formed may also vary with the number of ultrasonic vibrations to which the thin thermoplastic film 14 is subjected per unit area for a given period of time. This factor may be varied in a number of ways. For example, the number and size of the microapertures will vary somewhat with the line speed of the thin thermoplastic film 14 as it passes underneath the tip 54 of the ultrasonic horn 50. Generally speaking, as line speed increases, first the size of the microapertures decreases and then the number of microapertures decreases. As the number of microapertures decreases, the less the pattern of microapertures resembles the pattern of raised areas 34 on the pattern screen 32. The range of line speeds that usually yields microapertures also varies with the thickness and type of thermoplastic material utilized to form the thin thermoplastic film 14 and the material used as the liquid 62. For polyethylene having a thickness of about 0.5 mil, typical line speeds which usually yield microapertures for a wide variety of liquids range from about 5 to about 25 feet per minute. For example, if water is used as the liquid with polyethylene typical line speeds which usually yield microapertures range from about 5 to about 23 feet per minute.

It is believed that, to some extent, the variations in the number of microapertures formed and the size of the microapertures occurs due to the minute variations in the height of the raised areas or knuckles 34 of the fine mesh pattern screen 32. It should be noted that the fine mesh pattern screens used to date have been obtained from conventional everyday sources such as a hardware store. It is also believed that if a pattern screen 32 could be created where all of the raised areas 34 of the screen 32 were of exactly the same height these variations would only occur in uniform fashion with variations of line speed.

As was stated above, the area or size of each of the microapertures formed will also vary with the parameters discussed above. The area of the microapertures will also vary with the area of the raised areas of the pattern anvil such as the knuckles 34 on the fine mesh wire screen 32. It is believed that the type of thermoplastic material used in forming the thin thermoplastic film 14 will also vary the area of the microapertures formed if all other parameters are maintained the same. For example, the softer the thin thermoplastic film 14, the easier it is to push the thin thermoplastic film 14 through the raised areas of the fine mesh pattern screen 32. Because the raised areas (knuckles) on the fine mesh screen are generally pyramidal in shape, the deeper the raised area penetrates the thin thermoplastic film 14, the larger the microaperture. In such situations the shape of the microaperture will conform generally to the pyramidal shape of the raised area of the fine mesh screen and the microaperture will be generally pyramidally shaped, in the z direction, and will have an area which is greater at one end than at the other. As has been previously stated, the area of the microaperture should be measured at the narrowest point of the aperture. Of course, the height of the raised areas must be greater than the thickness of the thin film 14 for microapertures to be formed and the degree of excess, if any, necessary may vary with the type of thermoplastic film to be microapertured. In any event, the height of the raised areas must be sufficient to punch through the thermoplastic film including any elasticity which might be encountered in the punching operation. That is, the more elastic the thermoplastic film, the greater the height of the raised areas has to exceed the thickness of the thin thermoplastic film 14.

In some embodiments it may be necessary to subject the thin thermoplastic sheet material 14 to multiple passes through the apparatus 10 in order to microaperture the thin film 14. In such situations the thin film 14 will initially only be thinned in the pattern of the pattern anvil's raised areas. However, after two or more passes through the apparatus 10, with the thin thermoplastic film 14 being aligned in the same configuration with respect to the pattern anvil, microapertures may be formed. Essentially what is happening in these situations is that the thin thermoplastic film 14 is repeatedly thinned by repeated application of ultrasonic vibrational force until such time as microapertures are formed. Alternatively, the fine mesh wire diameter size may be increased with the consequent decrease in mesh count. Increasing the wire diameter size of the fine mesh screen 32 increases the likelihood that microapertures will be formed.

Another feature of the present invention is the fact that the microapertures can be formed in a predesignated area or areas of the thin thermoplastic film 14. This can be accomplished in a number of ways. For example, the thin thermoplastic film 14 may be subjected to ultrasonic vibrations only at certain areas of the sheet material, thus, microaperturing would occur only in those areas. Alternatively, the entire thin thermoplastic film 14 could be subjected to ultrasonic vibrations with the pattern anvil having raised areas only at certain locations and otherwise being flat. Accordingly, the thin thermoplastic film 14 would be microapertured only in those areas which correspond to areas on the pattern anvil having raised areas.

It should also be noted that some limitation exists in the number of microapertures which can be formed in a given thin thermoplastic film 14 on a single application of vibrational energy, i.e. a single pass through the apparatus if a wire mesh screen is used as the pattern anvil. This follows from the fact that, as was stated above, the height of the raised areas must exceed the thickness of the thin thermoplastic film 14 in conjunction with the fact that, generally, as the mesh count increases the height of the raised areas or knuckles decreases. In such situations, if the number of microapertures desired per unit area is greater than the number which can be formed in one pass through the apparatus, multiple passes are necessary with the alignment of the thin thermoplastic film 14 with respect to the raised areas being altered or shifted slightly on each pass.

Generally speaking, the area of each of the microapertures formed by the described hydrosonic method is greater than about ten (10) square micrometers.

A number of important observations about the process may now be made. For example, it should be understood that the presence of the liquid 62 is highly important to the present inventive process which uses the liquid 62 as a coupling agent. Because a coupling agent is present, the microapertures are punched through the thin film 14 as opposed to being formed by melting. Additionally, the presence of the shim plate 30 or its equivalent is necessary in order to provide an anvil mechanism against which the thin thermoplastic film 14 may be worked, that is apertured, by the action of the tip 54 of the ultrasonic horn 50. Because the vibrating tip 54 of the ultrasonic horn 50 is acting in a hammer and anvil manner when operated in conjunction with the heavy duty mesh screen 28/shim plate 30/fine wire mesh 32 combination, it should be readily recognized that a certain degree of tension must be placed upon the transport mechanism 22 by the downward displacement of the ultrasonic horn 50. If there is little or no tension placed upon the transport mechanism 22, the shim plate 30 cannot perform its function as an anvil and microaperturing generally does not occur. Because both the shim plate 30 and the fine mesh pattern wire 32 form the resistance that the ultrasonic horn 50 works against, they may be collectively referred to as a pattern anvil combination. It should be easily recognized by those in the art that the function of the pattern anvil can be accomplished by other arrangements than the heavy duty mesh screen 28/shim plate 30/fine mesh screen 32 combination. For example, the pattern anvil could be a flat plate with raised portions acting to direct the microaperturing force of the ultrasonic horn 50. Alternatively, the pattern anvil could be a cylindrical roller having raised areas. If the pattern anvil is a cylindrical roller with raised areas, it is desirable for the pattern anvil to be wrapped or coated with or made from a resilient material. Where the pattern anvil is a mesh screen the resiliency is provided by the fact that the screen is unsupported directly below the point of application of ultrasonic vibrations to the mesh screen.

The above described hydrosonic process for forming microapertures is contained in the above-referenced related applications. While this process is presently preferred for the formation of a pattern of microapertures in the thin thermoplastic film 14, any other appropriate method may be utilized.

As has been previously stated, a possible shortcoming of the above process is the fact that, to date, microapertures having an area of less than about ten (10) square micrometers have not been obtainable. Accordingly, the following additional step has been discovered which leads to the formation of ultra-microapertures having an aperture area in the range of from about one (1) to less than about ten (10) square micrometers has been discovered.

Thus, in the present process, the microapertured thermoplastic film 14 is transferred to a heating arrangement such as an oven or a source of hot air 76 where the microapertured film 14 is subjected to an application of thermal energy (heated). Importantly, the microapertured film 14 is not restrained or otherwise constrained in any physical manner during the heating step. It has been found that the application of thermal energy to the microapertured film 14, while the film 14 is in an unconstrained state, results in the shrinking of the microapertures down to the ultra-microaperture area size range. That is, the area of the microapertures will be reduced to the range of from about one (1) to less than about ten (10) square micrometers. For example, the area of the microapertures may be reduced to the range of from about 1 to about 5 square micrometers. More particularly, the area of the microapertures may be reduced to the range of from about 1 to about 2.5 square micrometers.

The temperature to which the thermoplastic film 14 will have to be heated to effect the shrinkage of the microapertures down to the ultra-microaperture range will vary with the thickness and type of thermoplastic film 14 utilized. Additionally, the size of the microapertures provided in the film 14 prior to the application of thermal energy will effect the amount of thermal energy which is necessary. Typically, with polyethylene films the film will have to be heated to at least about 110 degrees Centigrade. Other thermoplastic film materials may have to be heated to at least about 120 degrees Centigrade or more. Those of skill in the art can readily determine the degree of thermal energy which is necessary. Importantly, it has been found that a more uniform application of heat to the apertured film results in a more uniform area of the resulting ultra-microapertures. In this regard it has been found that a very uniform method for the application of heat to the apertured material is to pass the apertured film through a bath of a heated liquid such as water. Other exemplary liquids which may be utilized include, for example, chlorobenzene; 1,2,4 trichlorobenzene; alpha, 2, 4 trichlorotoluene, butyl cellosolve; 1, 1, 1, 2, 2, 3, 3 heptachloropropane; perfluorotertiary amines and perflurotributylamine. This action results in a very uniform raising of the temperature of the apertured film and, accordingly, a very uniform shrinking of the apertures to produce very uniform ultra-microapertures.

The invention will now be discussed with regard to specific examples which will aid those of skill in the art in a full and complete understanding thereof.

### EXAMPLE I

A sheet of 0.5 mil thick polyethylene film obtained from the Edison Company of Plainfield, New Jersey, and having the trade designation SE-702 was cut into a length of about 10 inches and a width of about 8 inches. The sample was subjected to processing in accordance with the present invention.

A model 1120 power supply obtained from the Branson Company of Danbury, Connecticut, was utilized. This power supply, which has the capacity to deliver 1,300 watts of electrical energy, was used to convert 115 volt, 60 cycle electrical energy to 20 kilohertz alternating current. A Branson type J4 power level control, which has the ability to regulate the ultimate output of the model 1120 power supply from 0 to 100%, was connected to the model 1120 power supply. In this example, the power level control was set at 100%. The actual amount of power consumed was indicated by a Branson model A410A wattmeter. This amount was about 800 watts.

The output of the power supply was fed to a model 402 piezoelectric ultrasonic transducer obtained from the Branson Company. The transducer converts the electrical energy to mechanical movement. At 100% power the amount of mechanical movement of the transducer is about 0.8 micrometers.

The piezoelectric transducer was connected to a mechanical movement booster section obtained from the Branson Company. The booster is a solid titanium metal shaft with a length equal to one-half of the wave length of the 20 kilohertz resonant frequency. Boosters can be machined so that the amount of mechanical movement at their output end is increased or decreased as compared to the amount of movement of the transducer. In this example the booster increased the amount of movement and has a gain ratio of about 1:2.5. That is, the amount of mechanical movement at the output end of the booster is about 2.5 times the amount of movement of the transducer.

The output end of the booster was connected to an ultrasonic horn obtained from the Branson Company. The horn in this example is made of titanium with a working face of about 9 inches by about 1/2 inch. The leading and trailing edges of the working face of the horn are each curved on a radius of about 1/8 inch. The horn step area is exponential in shape and yields about a two-fold increase in the mechanical movement of the booster. That is, the horn step area has about a 1:2 gain ratio. The combined increase, by the booster and the horn step area, in the original mechanical movement created by the transducer yields a mechanical movement of about 4.0 micrometers.

The forming table arrangement included a small forming table which was utilized to transport and support the polyethylene film to be microapertured. The forming table included two 2-inch diameter idler rollers which were spaced about 12 inches apart on the surface of the forming table. A transport mesh belt encircles the two idler rollers so that a continuous conveying or transport surface is created. The transport mesh belt is a square weave 20 x 20 mesh web of 0.020 inch diameter plastic filaments. The belt is about 10 inches wide and is raised above the surface of the forming table.

The transducer/booster/horn assembly, hereinafter the assembly, is secured in a Branson series 400 actuator. When power is switched on to the transducer, the actuator, by means of a pneumatic cylinder with a piston area of about 4.4 square inches, lowers the assembly so that the output end of the horn contacts the polyethylene film which is to be microapertured. The actuator also raises the assembly so that the output end of the horn is removed from contact with the polyethylene film when power is switched off.

The assembly is positioned so that the output end of the horn is adapted so that it may be lowered to contact the transport mesh belt between the two idler rollers. An 8-inch wide 0.005-inch thick stainless steel shim stock having a length of about 60 inches was placed on the plastic mesh transport belt to provide a firm support for a pattern screen which is placed on top of the stainless steel shim. In this example the pattern screen is a 250 by 250 mesh wire size weave stainless steel screen. The polyethylene film which was to be microapertured was then fastened onto the pattern wire using masking tape.

The forming table arrangement also included a liquid circulating system. The circulating system includes a liquid reservoir tank, a liquid circulating pump which may conveniently be located within the tank, associated tubing for transporting the liquid from the tank to a slotted boom which is designed to direct a curtain of liquid into the juncture of the output end of the horn and the polyethylene film which is to be microapertured.

In operation, the assembly was positioned so that the output end of the horn was at an angle of from about 10 to 15 degrees to the polyethylene film. Accordingly, a wedge shaped chamber was formed between the output end of the horn and the Edison polyethylene film to be microapertured. It is into this wedge shaped chamber that the liquid, in this example water, at room temperature, was directed by the slotted boom.

It should be noted that the actuator was positioned at a height to insure that, when the assembly is lowered, the downward movement of the output end of the horn is stopped by the tension of the transport mesh before the actuator reaches the limit of its stroke. In this example, actuating pressure was adjusted to about 8 pounds per square inch as read on a pressure gauge which is attached to the pneumatic cylinder of the actuator. This adjustment results in a total downward force of 35.2 pounds. (8 psi times 4.4 square inches of piston area equals 35.2 pounds of force.)

The sequence of operation was (1) the liquid pump was switched on and the area where the output end of the horn was to contact the polyethylene film was flooded with water; (2) the transport mesh conveyor system was switched on and the polyethylene film started moving at 6 feet per minute; and (3) power to the assembly was supplied and the assembly was lowered so that the output end of the horn contacted the polyethylene film while the sample continued to pass under the output end of the horn until the end of the sample was reached. The reading on the A410A wattmeter during the process is an indication of the energy required to maintain maximum mechanical movement at the output end of the horn while working against the combined mass of the water, the polyethylene film, the pattern wire, the shim stock, and the transport wire.

Next, the film was draped over an inverted 10 ml. beaker (1 inch in diameter and 1.3 inches in height). A four (4) inch diameter embroidery hoop was placed on the same surface and concentric with the beaker. The film was clamped into the hoop leaving an amount of slack caused by the beaker. The film was then subjected to 120 degrees of radiant heat which was provided by a circulating oven for a period of about five (5) seconds. Exposure of the unconstrained film was terminated when the film shrunk to an extent where it became taut within the hoop.

This example yielded an ultra-microapertured polyethylene film having a maximum ultra-microaperture density of about 31,000 microapertures per square inch with the ultra-microapertures having an area of about 1-4 square micrometers.

Figures IV and 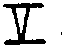 are photomicrographs of the thin polyethylene material ultra-microapertured in accordance with Example I.

The uses to which the ultra-microapertured thermoplastic sheet material of the present invention may be put are numerous. These include breathable outer cover stock for disposable diapers, fluid transfer coverstock for feminine care products, filtration devices and breathable food wrap. Other uses of the ultra-microapertured thin thermoplastic film include filtration devices, breathable materials for use in diapers, coverstock for feminine care products and barrier material for health care garments.

It is to be understood that variations and modifications of the present invention may be made without departing from the scope of the invention. For example, in some embodiments the use of multiple ultrasonic horns aligned abreast or sequentially may be desirable. Additionally, the process can be utilized to make any sized of aperture smaller. Thus, the principle behind the present invention is also generally applicable to reducing the size of any sized aperture located in a thermoplastic film, regardless of whether the resultant aperture is an ultra-micro aperture.

It is also to be understood that the scope of the present invention is not to be interpreted as limited to the specific embodiments disclosed herein, but only in accordance with the appended claims when read in light of the foregoing disclosure.

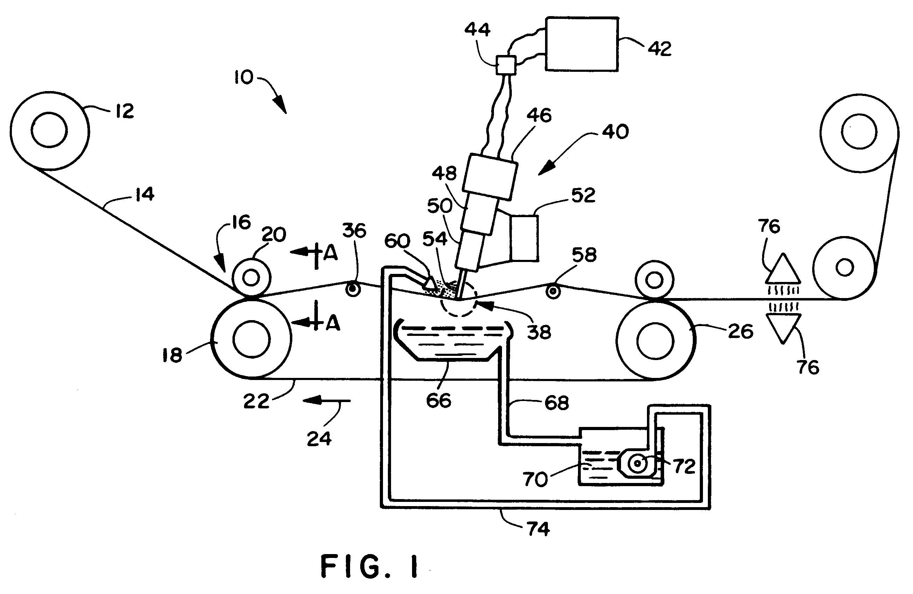

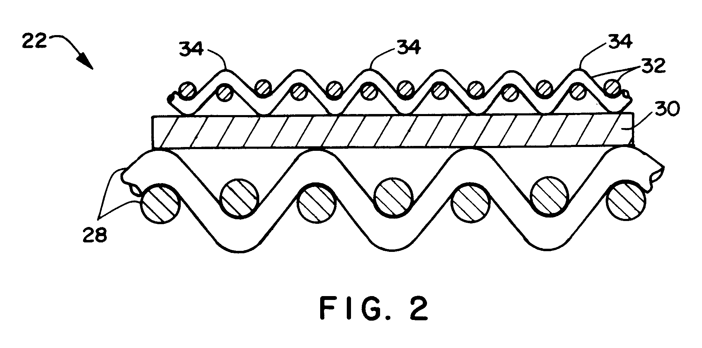

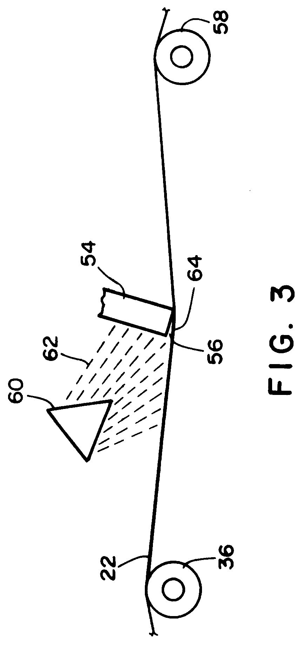

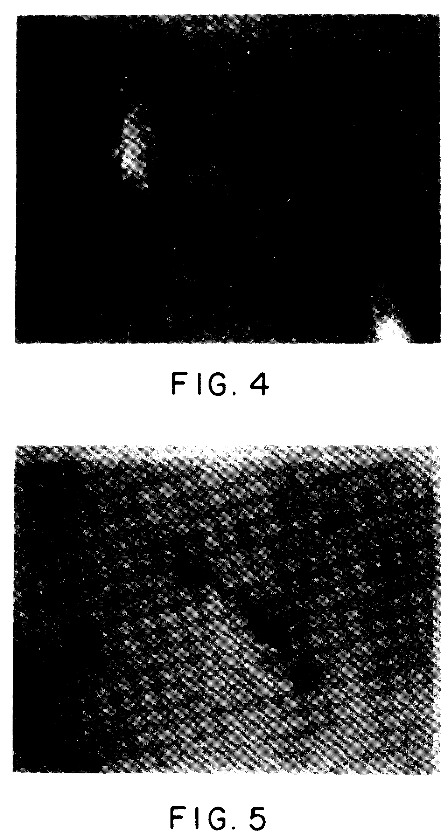

## Claims

1. A method for forming a generally uniform pattern of ultra-microapertures in a thermoplastic film, the method comprising the steps of:
(a) forming a generally uniform pattern of microapertures in a thermoplastic film; and
(b) heating the microapertured film while the film is unconstrained to a temperature where the microapertures shrink to form ultra-microapertures having an area ranging from at least about 1 square micrometer to less than about 10 square micrometers.

2. The method of claim 1, wherein the thermoplastic film is heated to at least about 110 degrees Centigrade.

3. The method of claim 1, wherein the thermoplastic film is heated to at least about 120 degrees Centigrade.

4. The method of claim 1, wherein the thermoplastic film is selected from one or more of the group consisting of one or more of polyolefins, polyesters, nylons, caprolactams, polyvinyl alcohol and thermoplastic elastomers.

5. The method of claim 1, wherein the ultra-microapertures range from about 1 square micrometer to less than about 5 square micrometers.

6. The method of claim 1, wherein the ultra-microapertures range from about 1 square micrometer to less than about 2.5 square micrometers.

7. A method for forming a generally uniform pattern of ultra-microapertures in a thermoplastic film, the method comprising the steps of:
(a) placing the thermoplastic film on a pattern anvil having a pattern of raised areas wherein the height of the raised areas is greater than the thickness of the film;
(b) conveying the film, while placed on the pattern anvil, in a machine direction through an area where a liquid is applied to the film;
(c) subjecting the film to ultrasonic vibrational energy in the area where the liquid is applied to the film to microaperture the film in a pattern generally the same as the pattern of raised areas on the pattern anvil; and
(d) heating the microapertured film while it is not subject to physical constraint to a temperature where the microapertures shrink to form ultra-microapertures ranging in area from about 1 square micrometer to less than about 10 square micrometers.

8. The method of claim 5, wherein the thermoplastic film is selected from one or more of the group consisting of one or more of polyolefins, polyesters, nylons, caprolactams, polyvinyl alcohol and thermoplastic elastomers.

9. The method of claim 5, wherein the liquid is selected from the group consisting of one or more of water, mineral oil, a chlorinated hydrocarbon, ethylene glycol or a solution of 50 volume percent water and 50 volume percent 2 propanol.

10. The method of claim 7, wherein the chlorinated hydrocarbon is selected form the group consisting of 1,1,1 trichloroethane or carbon tetrachloride.

11. The method of claim 7, wherein the thermoplastic film is heated to at least about 110 degrees Centigrade.

12. The method of claim 7, wherein the thermoplastic film is heated to at least about 120 degrees Centigrade.

13. The method of claim 7, wherein the area of the ultra-microapertures ranges from about 1 square micrometer to less than about 5 square micrometers.

14. A thermoplastic film defining at least about 1,000 ultra-microapertures per square inch over at least a portion thereof.

15. The ultra-microapertured thermoplastic film of claim 14, wherein the film defines at least about 5,000 ultra-microapertures per square inch over at least a portion thereof.

16. The ultra-microapertured thermoplastic film of claim 14, wherein the film defines at least about 20,000 ultra-microapertures per square inch over at least a portion thereof.

17. The ultra-microapertured thermoplastic film of claim 14, wherein the film defines at least about 90,000 ultra-microapertures per square inch over at least a portion thereof.

18. The ultra-microapertured thermoplastic film of claim 14, wherein the film defines at least about 160,000 ultra-microapertures per square inch over at least a portion thereof.

19. The ultra-microapertured thermoplastic film of claim 14, wherein the area of the ultra-microapertures ranges from about 1 to less than about 5 square micrometers.

20. The ultra-microapertured thermoplastic film of claim 14, wherein the area of the ultra-microapertures ranges from about 1 to less than about 2.5 square micrometers.

21. A method for reducing the size of apertures in a thermoplastic film, the method comprising the steps of:
(a) providing an apertured thermoplastic film; and
(b) heating the apertured film while the film is unconstrained to a temperature where the apertures shrink.
